# EUROPÄISCHE PATENTSCHRIFT

(11) **EP 3 335 949 B1**
(45) Veröffentlichungstag und Bekanntmachung des Hinweises auf die Patenterteilung: **04.09.2019**
(21) Anmeldenummer: 17207359.5
(22) Anmeldetag: 14.12.2017
(51) Int. Cl.: B60S 9/12

(54) **DEZENTRALE HUBSTÜTZENANORDNUNG, BETRIEBSVERFAHREN, FAHRGESTELL UND STRASSENFAHRZEUG**
DECENTRALIZED LIFTING SUPPORT ASSEMBLY, OPERATING METHOD, CHASSIS AND ROAD VEHICLE
DISPOSITIF BÉQUILLE DE LEVAGE DÉCENTRALISÉ, PROCÉDÉ DE FONCTIONNEMENT, CHÂSSIS ET VÉHICULE ROUTIER

(30) Priorität: 15.12.2016 DE 202016107009 U
(43) Veröffentlichungstag der Anmeldung: 20.06.2018
(73) Patentinhaber: Alois Kober GmbH, 89359 Kötz (DE)
(72) Erfinder: LUKAS, Maximilian, 87757 Kirchheim (DE); WILLMANN, Uwe, 89359 Kleinkötz (DE)
(74) Vertreter: Ernicke, Klaus Stefan

(56) Entgegenhaltungen:
- US-A1- 2011 024 706
- US-A1- 2015 006 027
- US-A1- 2015 054 271

## Beschreibung

Die Erfindung betrifft eine dezentrale hydraulische Hubstützenanordnung und ein damit ausgerüstetes Fahrgestell nebst einem Straßenfahrzeug sowie ein Betriebsverfahren mit den Merkmalen im Oberbegriff der selbstständigen Verfahrens- und Vorrichtungsnsprüche.

Ein solche hydraulische Hubstütze und dezentrale hydraulische Hubstützenanordnung sind aus der US 2011/0024706 A1 bekannt. Sie sind für schwergewichtige und große Wohnmobile im LKW-Format ausgebildet.

Die DE 20 2016 101 479 U1 zeigt eine Eckstützeinheit mit einem schwenkbaren Stützbein mit einem dort integrierten hydraulischen Linearaktuator und einem den Linearaktuator direkt beaufschlagenden dezentralen Hydraulikaggregat, die beide gemeinsam an einem Lagerkörper der Eckstützeinheit angeordnet sind. Die Eckstützeinheit wird mittels des Lagerkörpers an einem Landfahrzeug montiert.

Die US 2015/0006027 A1 offenbart die Oberbegriffe der unabhängigen Ansprüche 1 und 14.

Es ist Aufgabe der vorliegenden Erfindung, eine verbesserte Hubstützen- und Fahrgestelltechnik aufzuzeigen, die für kleinere und leichtere Fahrzeuge geeignet ist und die Leichtbau- und Raumoptimierungen gerecht werden kann.

Die Erfindung löst diese Aufgabe mit den Merkmalen in den selbstständigen Ansprüchen.

Die beanspruchte Fahrgestell- und Hubstützentechnik, d.h. insbesondere die dezentrale hydraulische Hubstützenanordnung, ein damit ausgerüstetes Fahrgestell, ein Straßenfahrzeug sowie ein Betriebsverfahren, haben verschiedene Vorteile.

Die beanspruchte dezentrale hydraulische Hubstützenanordnung hat mehrere hydraulische und autonome Hubstützen mit einer jeweils zugeordneten eigenen hydraulischen Versorgungseinheit und außerdem eine gemeinsame Steuereinrichtung für die Hubstützen. Die Steuereinrichtung weist eine integrierte elektrische Leistungs-Endstufe, insbesondere Halbleiter-Endstufe, für die Stromversorgung der elektrischen Pumpenantriebe der hydraulischen autonomen Hubstützen auf. Sie kann ferner eine Steuereinheit bzw. Steuerelektronik beinhalten. Die Stromversorgung und deren Steuerung für elektrischen Pumpenantriebe kann zentral von der Steuereinrichtung bewirkt werden. Die Leistungs-Endstufe und die Steuereinheit bzw. Steuerelektronik können gemeinsam auf einer einzelnen Steuerplatine angeordnet sein.

Dies hat einerseits den Vorteil, dass die Stromversorgung der Hubstützen über kleinere und besser verlegbare elektrische Leitungen erfolgen kann. Andererseits kann die Stromversorgung über eine bevorzugt halbleitergesteuerte elektrische Leistungs-Endstufe besser und genauer als beim Stand der Technik erfolgen, bei dem die elektrischen Pumpenantriebe einzeln und direkt an die Stromversorgung des Fahrzeugs angeschlossen sind und die Stromversorgung von der Steuereinrichtung nur über Relais ein- und ausgeschaltet wird.

Ein weiterer Vorteil ist die direkte Erfassung des Motorstroms der Pumpenantriebe in der Steuereinrichtung, insbesondere mittels der Steuereinheit und/oder der Leistungs-Endstufe. Die Erfassung kann nicht nur die Existenz eines Stromflusses detektieren, sondern kann bedarfsweise auch eine Messung des Motorstroms beinhalten. Die Steuereinrichtung kann diese erfassten Informationen zur gezielten Steuerung der hydraulischen Hubstützen und ihrer hydraulischen Aktoren einsetzen. Die Stromerfassung ermöglicht auch eine Detektion der Endlagen des Zylinders bzw. hydraulischen Aktors. Außerdem kann die besagte Stromerfassung auch mit dem vorgenannten Sensorsignal für die Detektion eines Bodenkontakts verknüpft und steuertechnisch ausgewertet und genutzt werden.

In einem eigenständigen Erfindungsgedanken ist generell vorgesehen, dass die Steuereinrichtung mit Drucksensoren in einem Hydraulikkreis der Hubstützen signaltechnisch verbunden ist und die mit Bodenkontakt ausgefahrenen sowie ggf. nivellierten Hubstützen auf ein untereinander abgestimmtes hydraulisches Druckverhältnis, insbesondere auf einen gleichen hydraulischen Druck, steuert. Dies kann insbesondere bei oder nach einer Nivellierung geschehen.

Die Steuereinrichtung ist an die Stromversorgung des Straßenfahrzeugs angeschlossen und kann dank der Leistungs-Endstufe die Hubstützen, insbesondere deren jeweiligen elektrischen Pumpenantrieb, einzeln und individuell mit Strom versorgen. Sie kann die Stromversorgung steuern und bedarfsweise auch regeln. Im einfachsten Fall beschränkt sich die Steuerung auf ein Ein- und Ausschalten. Bedarfsweise können komplexere Steuertechniken, z.B. mit variablen Motor- und Pumpenleistungen, gefahren werden. Eine hydraulische Hubstütze kann z.B. mit variablen Geschwindigkeiten, insbesondere im Schnellgang und im Schleichgang ein- und ausgefahren werden.

Insbesondere kann die Steuereinrichtung die Hubstützen einzeln und individuell unter Prüfung ihres Bodenkontakts steuern. Dies ist von Vorteil, um bei der dezentralen Hubstützenanordnung den sicheren Stand und den Bodenkontakt aller hydraulischen Hubstützen sicherzustellen.

Die Steuereinrichtung kann ein abgedichtetes Gehäuse aufweisen. Sie kann für eine Montage an einem bevorzugt metallischen Fahrgestell adaptiert sein. Sie lässt sich dadurch platzsparend und ohne räumliche Beeinträchtigung für den Aufbau- oder Fahrzeughersteller an geeigneter Stelle platzieren.

Dies kann z.B. im Bereich einer hinteren Achsordnung erfolgen. Eine andere günstige Anbaustelle befindet sich im Bereich einer Verbindungsstelle zwischen einem vorderen Fahrgestellteil im Bereich der Kabine oder eines evtl. Zukopfes und einem hinteren Fahrgestellbereich, insbesondere einem Anbauchassis, das nachträglich an einem Zugkopf montiert wird. An dieser Verbindungsstelle kann ein Höhenversatz zwischen den Fahrgestellteilen bestehen und durch einen Adapter ausgeglichen werden. In der Nähe dieses Adapters kann die Steuereinrichtung an einem Längsträger des Anbauchassis oder eines hinteren Fahrgestellbereichs montiert werden.

Die Steuereinrichtung kann mit einem einzeln oder mehrfach vorhandenen Bediengerät manuell bedient werden. Das Bediengerät kann stationär und/oder mobil angeordnet und mit der Steuereinrichtung per Kabel oder drahtlos verbunden sein, wobei entsprechende Kommunikationseinheiten in der Steuereinrichtung und im Bediengerät angeordnet sind. Das Bediengerät kann mehrere Eingabeelemente für wahlweise manuelle Bedienung oder automatische Nivellierung und/oder Eingabeelemente für Sonderpositionen, vorzugsweise Neigungen, des Straßenfahrzeugs, insbesondere Fahrgestells, aufweisen. Sonderpositionen können programmiert bzw. geteached und gespeichert werden. Das Bediengerät kann auch eine oder mehrere Anzeigen aufweisen.

Die hydraulischen Hubstützen können das Fahrgestell und das Straßenfahrzeug besser und sicherer abstützen. Die Hubstützen lassen sich insbesondere mit Leichtbau-Fahrgestellen kombinieren. Diese weisen kleinformatige und dünnwandige Fahrgestellteile auf, welche für die Aufnahme von Hubstützen und Stützlasten nicht überall geeignet und ausgebildet sind.

Die hydraulischen Hubstützen und die dezentrale hydraulische Hubstützenanordnung ermöglichen eine raumoptimierte Unterbringung am Fahrgestell des Straßenfahrzeugs. Hierbei kann ein Anbau vor allem an den Längsträgern eines Fahrgestells erfolgen, wobei der Innenraum im Fahrgestell, insbesondere in der bevorzugten Ausbildung als Leiterrahmen, für andere Zwecke frei bleiben kann. Der Aufbau- bzw. Fahrzeughersteller kann dadurch auch den im und am Fahrgestell befindlichen Raum für seine Zwecke optimal nutzen und wird hierbei durch die hydraulischen Hubstützen bzw. die dezentrale hydraulische Hubstützenanordnung im Wesentlichen nicht eingeschränkt.

In einem weiteren eigenständigen Erfindungsaspekt sind der hydraulische Aktor und die hydraulische Versorgungseinheit einer hydraulischen Hubstütze bzw. ihrer Stützeinheit als separate und mit gegenseitiger Distanz am Straßenfahrzeug eigenständig montierbare Einheiten ausgestaltet, die durch schlauchförmige hydraulische Leitungen miteinander verbunden sind. Diese Einzelkomponenten bauen klein und lassen sich durch die getrennte Anordnung jede für sich optimal am Straßenfahrzeug, insbesondere an dessen Fahrgestell, unterbringen und montieren. Dank der schlauchförmigen und bevorzugt biegeelastischen hydraulischen Leitungen können die Einbaulagen und die Abstände von Aktor und Versorgungseinheit je nach Fahrzeug variieren und an die jeweiligen Gegebenheiten optimiert angepasst werden. Der Aktor wird vorzugsweise an der Außenseite des Fahrgestells, insbesondere an der Außenseite von dessen Längsträgern, montiert. Die jeweils zugehörige hydraulische Versorgungseinheit kann wahlweise an der Innenseite oder Außenseite des Fahrgestells bzw. Längsträgers montiert werden. Sie kann auch mit einer Schutzkappe abgedeckt werden.

Günstig ist die Ausbildung des Aktors als mehrstufig teleskopierbarer und beidseitig beaufschlagbarer hydraulischer Zylinder mit beweglicher Kolbenstange und beweglichem Innenrohr sowie hierzu relativ ortsfestem Außenrohr. Ein solcher, z.B. zweistufiger, hydraulischer Zylinder kann gesteuert ausgefahren und eingefahren werden. Hierbei kann die bewegliche Kolbenstange ein- und ausgefahren werden. Sie kann dabei an ihrem freien Ende ein Stützteller aufweisen. Der hydraulische Aktor kann in verschiedenen Ausfahrstellungen auf einfache und sichere Weise blockiert werden, z.B. durch Rückschlagventile. Der hydraulische Aktor kann andererseits auch aktiv gesteuert wieder eingefahren werden. Hierfür kann eine einseitig oder beidseitig fördernde Pumpenanordnung mit Vorteil eingesetzt werden.

In einem weiteren eigenständigen Erfindungsgedanken ist vorgesehen, dass die hydraulische Hubstütze, insbesondere ihr hydraulischer Aktor, starr und relativ ortsfest am Straßenfahrzeug, insbesondere an dessen Fahrgestell, montiert und fixiert werden kann. Die bei vorbekannten Hubstützen übliche zusätzliche Schwenklagerung des Aktors kann entfallen.

Der Verzicht auf diese zusätzliche Beweglichkeit ist besonders für einen hydraulischen Aktor von Vorteil. Er kann dank relativ großer Ausfahrwege im eingefahrenen Zustand eine kleine Störgröße haben und dadurch eine große Bodenfreiheit bieten. Andererseits sind die vergrößerten Hubwege bzw. Ausfahrwege und deren gezielte Steuerbarkeit für spezielle Anwendungen von Vorteil, insbesondere zur Erzielung von Sonderpositionen des Fahrzeugs. Dies können z.B. bestimmte gewünschte Neigungen des Fahrgestells sein.

Beispielsweise kann mittels einer absenkbaren hinteren Achsanordnung einerseits das Fahrgestell schräg gestellt werden und darüber hinaus eine zusätzliche Schrägstellung durch die dezentrale hydraulische Hubstützenanordnung erreicht werden. Dies ist z.B. günstig, um den Auffahrwinkel für heckseitige Auffahrrampen zu optimieren und Knickstellen am Übergang zwischen Auffahrrampe und Fahrgestell möglichst zu vermeiden oder zu minimieren. Die beanspruchte hydraulische Hubstützenanordnung kann dabei das schräg gestellte Fahrgestell optimal abstützen und stabilisieren sowie die abgesenkte Achsanordnung entlasten.

Eine lösbare Verbindung eines Trägers und eines Montagebeschlags für die Montage eines hydraulischen Aktors am Straßenfahrzeug, insbesondere Fahrgestell, hat den Vorteil einer einerseits sicheren Halterung, Führung und Fixierung des Aktors und andererseits einer variablen Anbaumöglichkeit an das Straßenfahrzeug, insbesondere an dessen Fahrgestell, je nach gewählter Anbauposition. Die dezentrale hydraulische Hubstützenanordnung kann weitgehend vereinheitlicht sein und kann untereinander gleiche hydraulische Aktoren und jeweils zugehörige hydraulische Versorgungseinheiten aufweisen. Auch die Träger für deren Montage können gleich sein. Eine Adaption an die jeweilige fahrzeugspezifische Anbausituation kann durch die Montagebeschläge erfolgen. Die dezentrale hydraulische Hubstützenanordnung ist einerseits durch den hohen Vereinheitlichungsgrad aufwandsarm und kostengünstig und bietet andererseits über die Montagebeschläge eine große Adaptionsbreite auf ebenfalls kostengünstige und einfache Weise. Die beanspruchte dezentrale Hubstützenanordnung lässt sich dadurch vielfältig einsetzen. Sie kann bei der Erstausrüstung eines Straßenfahrzeugs oder auch im Wege der Nachrüstung montiert werden. Bei einem Fahrzeugwechsel kann die Hubstützenanordnung vom Betreiber mitgenommen und am nächsten Fahrzeug montiert werden, wobei ggf. nur die Montagebeschläge zu tauschen sind.

Der hydraulische Aktor und die hydraulische Versorgungseinheit nebst den verbindenden hydraulischen Leitungen bilden einen geschlossenen Hydraulikkreis. Die hydraulische Hubstütze bzw. ihre Stützeinheit sind dadurch autonom und bedürfen keiner externen Zuführung von Hydraulikflüssigkeit.

Es genügt die Zuführung von Energie für die Pumpenanordnung, insbesondere elektrischen Strom für einen elektrischen Pumpenantrieb, vorzugsweise Gleichstrom für einen elektrischen Gleichstrommotor. Durch die autonome Ausbildung der hydraulischen Hubstützen und die dezentrale Hubstützenanordnung wird nur wenig Platz im Straßenfahrzeug bzw. im Fahrgestell benötigt. Der Leitungsaufwand wird reduziert und kann sich auf elektrische Leitungen beschränken. Diese Leitungen für Leistungs- und Signalströme sind flexibel und brauchen wenig Platz. Sie lassen sich ohne größeren Aufwand am Fahrzeug verlegen und an die jeweilige Einbausituation adaptieren.

Die hydraulische Versorgungseinheit weist eine Pumpenanordnung, einen Tank für Hydraulikflüssigkeit, Leitungsanschlüsse für die hydraulischen Leitungen zum Aktor und eine Steueranordnung auf. In einem weiteren eigenständigen Erfindungsgedanken ist vorgesehen, dass die Hubstütze bzw. der Aktor und die Versorgungseinheit einen gemeinsamen geschlossene Hydraulikkreis aufweisen und der Tank eine für die Lebensdauer ausreichende und bevorzugt vollständige Befüllung mit einem Hydraulikfluid (sog. Lifetime-Füllung) hat. Der geschlossene Hydraulikkreis bedarf keiner besonderen Pflegemaßnahmen durch Entlüftung, Nachfüllen etc.. Hydraulikverluste werden durch die kleine Kreisdimension minimiert. An den geschlossenen Hydraulikkreis kann an geeigneter Stelle ein Druckausgleich angeschlossen sein, z.B. im Tank- oder Zylinderbereich. Damit kann auch das Kolbenstangenvolumen kompensiert werden.

Mit dem geschlossenen Hydraulikkreis und einem steuerbaren elektrischen Pumpenantrieb kann ein elektrohydraulischer Direktantrieb für die hydraulische Hubstütze gebildet werden. Die Ein- und Ausfahrbewegungen der hydraulischen Hubstütze können direkt über den Pumpenantrieb bzw. dessen Elektromotor gesteuert werden.

Andererseits weist die hydraulische Versorgungseinheit eine schlanke längliche Form mit einer Reihenanordnung ihrer Komponenten entlang einer Längsachse auf. Dies ist für den Anbau im Bereich eines Leichtbau-Fahrgestells, insbesondere der Längsträger von Vorteil. Günstig ist außerdem, dass die Leitungsanschlüsse für die schlauchförmigen Hydraulikleitungen gemeinsam an einer Stirnseite der Steueranordnung angeordnet und entlang der Längsachse der Versorgungseinheit ausgerichtet sind. Die hierdurch sich ergebenden axialen Leitungsabgänge sind für eine belastungsarme und bauraumgünstige Führung und Verlegung der schlauchförmigen und bevorzugt flexiblen hydraulischen Leitungen von Vorteil. Übermäßige Leitungsbelastungen und insbesondere Knickstellen können vermieden werden. Günstig ist hierbei auch die Anordnung drehbarer Leitungskupplungen an der hydraulischen Versorgungseinheit.

In einem weiteren eigenständigen Erfindungsaspekt ist vorgesehen, dass die Pumpenanordnung der hydraulischen Versorgungseinheit elektrisch angetrieben ist und einen Stromanschluss für eine stromzuführende Leitung sowie einen mit dem Fahrgestell leitend verbindbaren Masseanschluss aufweist. Hierdurch kann der Leitungsaufwand vereinfacht und minimiert werden. Insbesondere können durch den Entfall einer separaten Masseleitung die stromzuführenden Leitungen kleiner, flexibler und leichter verlegbar sowie montierbar gestaltet sein. Das üblicherweise metallische Fahrgestell kann für die Masserückführung zur Energieversorgung, insbesondere zu einer fahrzeugeigenen Batterie oder einem Akku, genutzt werden.

Nach einem anderen eigenständigen erfinderischen Aspekt weist die hydraulische Versorgungseinheit einen im Notfall lösbaren Fluidablass im Hydraulikkreis auf, der z.B. an einer Pumpenanordnung und/oder einer Steueranordnung der hydraulischen Versorgungseinheit angeordnet ist. Der Fluidablass wirkt mit einem Bypass zusammen und erlaubt im Notfall, z.B. bei einer Blockade der hydraulischen Hubstütze, einen Ablass von Hydraulikflüssigkeit und eine Umgehung der Sperrwirkung im Hydraulikkreis. Die Hubstütze unter dem Eigengewicht des angehobenen Fahrzeugs oder durch ein Werkzeug eingefahren werden.

Nach einem weiteren eigenständig erfinderischen Aspekt weist die autonome hydraulische Hubstütze einen den Bodenkontakt detektierenden Sensor auf. Dies kann z.B. ein Drucksensor im Hydraulikkreis sein. Durch diese Detektionsmöglichkeit kann die Ausfahrbewegung der hydraulischen Hubstütze in Abhängigkeit vom Erreichen eines Bodenkontakts gesteuert und überwacht werden. Außerdem kann mit dem Sensor, insbesondere einem Drucksensor, auch der Kraftaufbau nach Erreichen des Bodenkontakts überprüft werden. Dies kann in Verbindung mit einer Überwachung des Pumpenantriebs der hydraulischen Versorgungseinheit erfolgen, um das Sensorergebnis zu verifizieren und auf Plausibilität zu überprüfen. Im Endeffekt kann überwacht und festgestellt werden, ob die Hubstütze tatsächlich ausgefahren ist und ihre Stützfunktion erfüllt.

Dies kann für die hydraulische Hubstütze einzeln und individuell sowie unabhängig von den anderen Hubstützen überwacht und gesteuert werden. Bei der dezentralen hydraulischen Hubstützenanordnung kann dadurch überwacht und sichergestellt werden, dass tatsächlich bei einer Betätigung alle eingebundenen hydraulischen Hubstützen ausgefahren sind und Bodenkontakt haben sowie ihre Stützfunktionen erfüllen. Bei konventionellen und insbesondere zentralen Hubstützenanordnungen ist dies in der Regel nicht möglich. Bei solchen Hubstützenanordnungen hat üblicherweise eine der Hubstützen keinen Bodenkontakt, sodass kein wirklich sicherer Stand und keine sichere Abstützung gewährleistet sind.

Die Anordnung einer hydraulischen Hubstütze an einer Einstiegsstelle zu einer Fahrerkabine hat den Vorteil, dass die benachbarte und vorzugsweise von einem Frontantrieb angetriebene vordere Achse direkt entlastet werden kann. Diese Montagestelle hat außerdem wenig Störpotenzial und bietet eine gute und stabile Abstützmöglichkeit, insbesondere an einem axialen Unterzug eines vorderen Fahrgestellteils, insbesondere eines Zugkopfchassis. Für die dortige zerklüftete Anbausituation ist eine getrennte Anordnung von hydraulischem Aktor und hydraulischer Versorgungseinheit nebst flexibler hydraulischer Schlauchverbindung von besonderem Vorteil.

Ferner ist es günstig, die Hubstütze unter der Einstiegstelle und mit Versatz gegenüber der Fahrzeugaußenseite anzuordnen, so dass der Einstieg nicht behindert wird. Durch eine an der Einstiegstelle befindliche Stufe kann die Steifigkeit des Fahrgestells und die Krafteinleitungsmöglichkeit der Hubstütze zusätzlich verbessert werden. In Verbindung mit heckseitigen Hubstützen ergibt sich außerdem der Vorteil einer größeren Stützlänge der Hubstützenanordnung.

Die Montage einer Hubstütze an einer gemeinsamen Verbindungsstelle von mehreren Fahrgestellteilen hat den Vorteil, dass die vorhandene Versteifung der Verbindungsstelle zusätzlich für die Hubstütze genutzt werden kann. Die Verbindungsstelle kann für die Hubstütze und die Fahrgestellteile gemeinsam sein. Hierbei können auch gemeinsame Verbindungsmittel, insbesondere Verschraubungen genutzt werden. An diesen Stellen kann außerdem eine definierte Schnittstelle vorhanden sein, die nur einen vom Fahrzeughersteller autorisierten und mit der Fahrzeugzulassung vereinbarbaren Stützenanbau erlaubt. Die Krafteinleitung kann durch verformte und formschlüssig ineinander greifende Verbindungselemente zusätzlich stabilisiert werden.

Solche gemeinsamen Verbindungsstellen von Fahrgestellteilen und Hubstütze versteifen außerdem die Fahrgestellteile und ermöglichen deren Optimierung. Zudem bieten die Verbindungsstellen besonders günstige Montagestellen, die ggf. auch eine besonders vorteilhafte große Montagehöhe ermöglichen, insbesondere unter Einbeziehung eines aufrechten Adapters zum Höhenausgleich bei einem Anbauchassis. Hierdurch können Biegemomente am Fahrgestell besser eingeleitet und aufgenommen werden.

Besonders günstige Verbindungsstellen zwischen Fahrgestellteilen befinden sich zwischen Längsträgern des Fahrgestells und einer Heckverlängerung und/oder zwischen den besagten Längsträgern und einem Achsbock. Die Verbindungsstelle zu einer Heckverlängerung ermöglicht eine besonders lastgünstige Position einer Hubstütze, mit der besonders auch Zusatzlasten im Heckbereich optimal aufgenommen und abgestützt werden können.

Die vorgenannten eigenständigen Erfindungsaspekte der hydraulischen Hubstütze, der dezentralen hydraulischen Hubstützenanordnung und des damit ausgerüsteten Fahrgestells bzw. Straßenfahrzeugs können in vorteilhafter Weise miteinander kombiniert werden. Hierbei kann eine Kombination von einigen oder allen Erfindungsaspekten vorliegen. Ferner können die besagten eigenständigen Erfindungsaspekte auch mit anderen hydraulischen Hubstützen kombiniert werden, die eine ausfahrbare und zur eigenen Abstützung an einem Untergrund ausgebildete Stützeinheit mit einem hydraulischen Aktor und einer zugeordneten eigenen hydraulischen Versorgungseinheit aufweisen. Ferner ist eine Kombination mit anderen dezentralen hydraulischen Hubstützenanordnungen möglich, die eine solche vorgenannte hydraulische Hubstütze beinhalten. Schließlich ist auch eine Kombination mit anderen Fahrzeugen und deren Fahrgestellen sowie anderen Einbausituationen möglich.

Eine dezentralen hydraulische Hubstützenanordnung und/oder eine hydraulische Hubstütze und/oder ein Fahrgestell und/oder ein Straßenfahrzeug kann/können folgende weitere Ausgestaltungsmerkmale einzeln oder in Kombination haben.

Die Hubstützenanordnung kann untereinander gleiche hydraulische Aktoren und gleiche zugeordnete hydraulische Versorgungseinheiten sowie individuelle Montagebeschläge aufweisen, die an die Anbausituation am jeweiligen Straßenfahrzeug, insbesondere an dessen Fahrgestell, adaptiert sind.

Die Steuereinrichtung der Hubstützenanordnung kann ein abgedichtetes Gehäuse aufweisen und kann für eine Montage an einem bevorzugt metallischen Fahrgestell adaptiert sein.

Die Steuereinheit und die Endstufe sowie ggf. die Erfassungseinrichtung für die Fahrzeuglage können gemeinsam auf einer Steuerplatine angeordnet sein.

Die dezentrale hydraulische Hubstützenanordnung kann ein stationäres und/oder mobiles manuelles Bediengerät aufweisen, das mit der Steuereinrichtung kabelgebunden oder drahtlos verbunden ist.

Das Bediengerät kann Eingabeelemente für wahlweise manuelle Bedienung oder automatische Nivellierung und/oder Eingabeelemente für Sonderpositionen, vorzugsweise Neigungen, des Straßenfahrzeugs, insbesondere seines Fahrgestells, aufweisen.

Die Steuereinrichtung der Hubstützenanordnung kann mit einer Steuerung für eine absenkbare hintere Achsanordnung des Straßenfahrzeugs verbunden sein, wobei die Hubstützenanordnung auf die Senklage der Achsanordnung einstellbar ist.

In einem eigenständigen Erfindungsgedanken weist eine dezentrale hydraulische Hubstützenanordnung für ein motorisiertes Straßenfahrzeug mit einem Fahrgestell, insbesondere für Wohn-, Verkaufs- oder Sondermobile, mehrere, insbesondere vier, hydraulische und autonome Hubstützen mit einer jeweils zugeordneten eigenen hydraulischen Versorgungseinheit und mit einer gemeinsamen Steuereinrichtung aufweist, wobei die Steuereinrichtung mit Drucksensoren in einem Hydraulikkreis der Hubstützen signaltechnisch verbunden ist und die mit Bodenkontakt ausgefahrenen sowie ggf. nivellierten Hubstützen auf ein untereinander abgestimmtes hydraulisches Druckverhältnis, insbesondere auf einen gleichen hydraulischen Druck, steuert.

Der hydraulische Aktor der hydraulischen Hubstütze und ihrer Stützeineinheit kann als mehrstufig telekopierbarer, beidseitig beaufschlagbarer, hydraulischer Zylinder ausgebildet sein, der eine ein- und ausfahrbare Kolbenstange, ein umgebendes ein- und ausfahrbares Innenrohr und ein umgebendes relativ ortsfestes Außenrohr aufweist.

Am freien Ende des hydraulischen Aktors, insbesondere am freien Ende der Kolbenstange, kann ein Stützteller angeordnet sein.

Die hydraulische Hubstütze kann in einem selbstständigen Erfindungsaspekt eine ausfahrbare und zur eigenen Abstützung an einem Untergrund ausgebildete Stützeineinheit mit einem hydraulischen Aktor und einer zugeordneten eigenen hydraulischen Versorgungseinheit aufweisen, wobei die Hubstütze einen Träger und einen Montagebeschlag für den hydraulischen Aktor aufweist, die dazu ausgebildet sind, den hydraulischen Aktor starr aufzunehmen und relativ ortsfest an einem Straßenfahrzeug, insbesondere an dessen Fahrgestell, zu fixieren.

Der Träger und der Montagebeschlag können lösbar miteinander verbunden sein, wobei der Montagebeschlag austauschbar und an unterschiedliche Anbaustellen am Straßenfahrzeug adaptierbar ist.

Der Träger kann eine formschlüssige Aktoraufnahme, insbesondere eine an die Aktorkontur adaptierte Klemmschale, aufweisen.

Der Montagebeschlag kann eine an unterschiedliche Anbaustellen am Straßenfahrzeug, insbesondere an dessen Fahrgestell, angepasste Montagekonsole mit einer an die Aktorkontur adaptierten Klemmschale aufweisen.

Die hydraulische Versorgungseinheit der Hubstütze kann eine Pumpenanordnung, einen geschlossenen Tank für Hydraulikflüssigkeit, Leitungsanschlüsse für hydraulische Leitungen und eine Steueranordnung aufweist.

Die hydraulische Versorgungseinheit kann eine schlanke längliche Form aufweisen, wobei eine Pumpenanordnung, ein Tank für Hydraulikflüssigkeit, und eine Steueranordnung in einer Reihe hintereinander entlang einer Längsachse der Versorgungseinheit angeordnet sind.

Die Leitungsanschlüsse der hydraulischen Versorgungseinheit können gemeinsam an einer Stirnseite der Steueranordnung angeordnet und entlang der Längsachse ausgerichtet sein.

Die besagten Leitungsanschlüsse können an der hydraulischen Versorgungseinheit drehbare Leitungskupplungen aufweisen.

Die hydraulische Hubstütze kann in einem selbstständigen Erfindungsaspekt eine ausfahrbare und zur eigenen Abstützung an einem Untergrund ausgebildete Stützeineinheit mit einem hydraulischen Aktor und einer zugeordneten eigenen hydraulischen Versorgungseinheit aufweisen, wobei die hydraulische Hubstütze einen geschlossenen Hydraulikkreis aufweist und wobei die Versorgungseinheit einen geschlossenen Tank mit einer Lifetime-Füllung von Hydraulikflüssigkeit aufweist.

Die Pumpenanordnung der hydraulischen Hubstütze kann einseitig oder beidseitig fördernd ausgebildet sein.

Die hydraulische Hubstütze kann in einem selbstständigen Erfindungsaspekt eine ausfahrbare und zur eigenen Abstützung an einem Untergrund ausgebildete Stützeineinheit mit einem hydraulischen Aktor und einer zugeordneten eigenen hydraulischen Versorgungseinheit aufweisen, wobei die Pumpenanordnung der hydraulischen Hubstütze elektrisch angetrieben ist und einen Stromanschluss für eine stromzuführende Leitung und einen mit dem Fahrgestell leitend verbindbaren Masseanschluss aufweist.

Die hydraulische Hubstütze kann in einem selbstständigen Erfindungsaspekt eine ausfahrbare und zur eigenen Abstützung an einem Untergrund ausgebildete Stützeineinheit mit einem hydraulischen Aktor und einer zugeordneten eigenen hydraulischen Versorgungseinheit aufweisen, wobei die hydraulische Versorgungseinheit einen im Notfall lösbaren Fluidablass im Hydraulikkreis, insbesondere an einer Pumpenanordnung und/oder einer Steueranordnung, aufweist.

Die hydraulische Hubstütze kann in einem selbstständigen Erfindungsaspekt eine ausfahrbare und zur eigenen Abstützung an einem Untergrund ausgebildete Stützeineinheit mit einem hydraulischen Aktor und einer zugeordneten eigenen hydraulischen Versorgungseinheit aufweisen, wobei die autonome hydraulische Hubstütze einen den Bodenkontakt detektierenden Sensor, insbesondere einen Drucksensor im Hydraulikkreis, aufweist.

Der Drucksensor kann an der hydraulischen Auslassseite der Steueranordnung angeordnet sein.

Eine hydraulische Hubstütze kann für eine Montage an einer Einstiegstelle zu einer Fahrerkabine und eine andere Hubstütze für eine Montage an einem Heckbereich des Fahrgestells adaptiert sein.

Ein Fahrgestell für motorisierte Straßenfahrzeuge weist eine dezentrale Hubstützenanordnung mit mehreren hydraulischen autonomen Hubstützen auf, die jeweils einen hydraulischen Aktor mit einer zugeordneten eigenen hydraulischen Versorgungseinheit aufweisen, wobei die Hubstützenanordnung eine Hubstütze umfasst, die an einer Einstiegstelle zu einer Fahrerkabine angeordnet ist, wobei der hydraulische Aktor an einem Unterzug und ggf. einem Dom eines vorderen Fahrgestellteils angeordnet ist und die zugehörige hydraulische Versorgungseinheit mit Abstand daneben, insbesondere in einer Vertiefung des vorderen Fahrgestellteils, angeordnet ist.

Bei einer Ausgestaltung des Fahrgestells kann die Hubstützenanordnung eine Hubstütze umfassen, die an einem Heckbereich des Fahrgestells, insbesondere an einer gemeinsamen Verbindungsstelle von einem Längsträger und einer Heckverlängerung, angeordnet ist.

Das Fahrgestell kann für einen Frontantrieb mit einer angetriebenen Vorderachse ausgelegt sein und eine antriebslose hintere Achsanordnung aufweisen.

Die hintere Achsanordnung kann als gefederte und ggf. absenkbare Achsanordnung, insbesondere als Radlenkerachse, ausgebildet sein.

Das Fahrgestell kann einen frontseitigen motorisierten Zugkopf und ein Anbauchassis mit einer hinteren Achsanordnung aufweisen.

Der motorisierte Zugkopf kann ein Zugkopfchassis aufweisen, das mit dem höhenversetzten Anbauchassis über einen Adapter verbunden ist.

Bei einer Ausgestaltung des Fahrgestells kann eine hydraulische Hubstütze am Zugkopfchassis an oder unter der Einstiegstelle oder im Bereich von einer Wagenheberaufnahme angeordnet sein.

Hydraulische Hubstützen können in Fahrtrichtung beidseitig am Fahrgestell angeordnet sein.

Das Straßenfahrzeug kann einen Fahrantrieb, ein Fahrgestell und eine dezentrale Hubstützenanordnung mit mehreren hydraulischen autonomen Hubstützen sowie einen Aufbau, insbesondere einen Wohnmobilaufbau oder einen Verkaufs- oder Präsentationsmobilaufbau oder einen Sonderaufbau, aufweisen.

In den Unteransprüchen sind weitere vorteilhafte Ausgestaltungen der Erfindung angegeben.

Die Erfindung ist in den Zeichnungen beispielhaft und schematisch dargestellt. Im Einzelnen zeigen:
- Figur 1:: ein motorisiertes Straßenfahrzeug mit einem Fahrgestell und einer dezentralen hydraulischen Hubstützenanordnung mit mehreren Montagemöglichkeiten für hydraulische Hubstützen in einer schematischen Seitenansicht,
- Figur 2 und 3:: eine perspektivische Ansicht und eine Draufsicht auf ein Fahrgestell mit einer Hubstützenanordnung gemäß Figur 1,
- Figur 4:: eine abgebrochene perspektivische Ansicht einer am Chassis montierten autonomen hydraulischen Hubstütze,
- Figur 5:: eine perspektivische Ansicht einer autonomen hydraulischen Hubstütze,
- Figur 6 und 7:: einen hydraulischen Aktor der Hubstütze von Figur 5 in perspektivischer Ansicht und im Längsschnitt,
- Figur 8:: einen Schemaplan der Hubstützenanordnung mit einer Nivelliereinrichtung,
- Figur 9:: ein Bediengerät für die Hubstützenanordnung.

Die Erfindung betrifft eine autonome hydraulische Hubstütze (4,7) und eine dezentrale hydraulische Hubstützenanordnung (3). Die Erfindung betrifft ferner ein Fahrgestell (2) für ein motorisiertes Straßenfahrzeug (1) mit einer solchen Hubstützenanordnung (3) und ein mit einer solchen Hubstützenanordnung (3) ausgerüstetes motorisiertes Straßenfahrzeug (1). Die Erfindung erfasst auch ein Verfahren zum Betrieb der dezentralen hydraulischen Hubstützenanordnung (3).

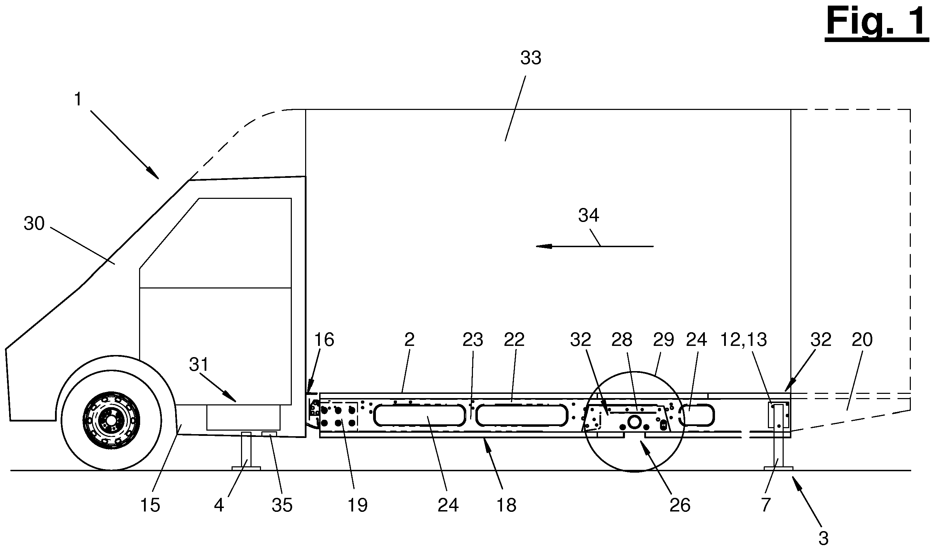

Figur 1 zeigt schematisch ein motorisiertes Fahrzeug (1) mit einem Fahrgestell (2) und einer dezentralen hydraulischen Hubstützenanordnung (3). Das Fahrzeug (1) ist z.B. ein Straßenfahrzeug und weist einen vorzugsweise frontseitig angeordneten Fahrantrieb mit einem Motor nebst Getriebe und einer angetriebenen, vorzugsweise vorderen Achse auf. Das Straßenfahrzeug (1) besitzt einen Aufbau (33) und eine frontseitige Fahrkabine (30), die in den Aufbau (33) integriert oder separat angeordnet sein kann. An der Fahrerkabine (30) befindet sich eine Einstiegstelle (31). Hier kann eine Trittstufe angeordnet sein. Die vorbezeichneten Richtungsangaben für vorne und hinten beziehen sich jeweils auf die durch Pfeil (34) angegebene Fahrtrichtung bzw. Fahrzeuglängsachse.

Das Fahrgestell (2), dass auch als Chassis bezeichnet wird, kann als ein einheitliches und über die Fahrzeuglänge durchgehendes Fahrgestell ausgebildet sein. In der gezeigten und bevorzugten Anordnung ist das Fahrgestell (2) unterteilt. Es kann aus einem frontseitigen Zugkopf (15) mit einem eigenen Zugkopfchassis (16) und aus einem Anbauchassis (18) bestehen, die ggf. von unterschiedlichen Herstellern stammen. Das Zugkopfchassis (15) weist den Fahrantrieb mit Motor und Getriebe, eine Lenkeinrichtung und eine frontgetriebene Vorderachse auf. Das Zugkopfchassis (16) kann mit dem Anbauchassis (18) über einen Adapter (19) verbunden sein, der ggf. einen Höhenunterschied gegenüber dem bevorzugt tiefer gelegten Anbauchassis (18) ausgleicht. Das Anbauchassis (18) weist eine hintere Achsanordnung (26) auf, die in der gezeigten Ausführungsform nicht angetrieben ist und als Schleppachse ausgebildet ist. Alternativ kann das Straßenfahrzeug (1) einen Heckantrieb mit einer angetriebenen hinteren Achsanordnung aufweisen. Hierfür eignet sich z.B. ein über die Fahrzeuglänge durchgehendes Fahrgestell.

Die Achsanordnung (26) kann eine oder mehrere Achsen aufweisen. Diese sind vorzugsweise als Radlenkerachsen ausgebildet und weisen jeweils einen massiven oder bevorzugt rohrförmigen Achskörper (27) mit endseitigen gelenkig gelagerten Radlenkern bzw. Schwinghebeln und daran drehbar gelagerten Rädern (29) auf. Die Radlenkerachse kann z.B. wie in den gezeigten Ausführungsbeispielen als Längslenkerachse oder in anderer Ausführung als Schräglenkerachse ausgebildet sein. Die Achsanordnung (26) kann ferner eine Federung aufweisen. Dies kann eine in die Achse integrierte Gummi- oder Drehstabfederung oder eine externe Federung, z.B. eine Luftfederung sein. Ferner sind Stoßdämpfer für die Radlenker bzw. deren Schwinghebel vorhanden. Die Achsanordnung (26) kann auch eine Niveauregulierung aufweisen, mit der die Fahrgestellhöhe bzw. die Bodenfreiheit variiert werden kann. Die Achsanordnung (26) kann zudem absenkbar sein, z.B. über eine Luftfederung oder eine Niveauregulierung. Hierbei können z.B. die Radlenker gegenüber dem Achskörper (27) gedreht werden. Die Achsabsenkung ermöglicht ein Senken und Heben des Fahrzeughecks mit Neigung des Fahrgestells (2) und ggf. auch dessen Auflage auf dem Untergrund. Das Straßenfahrzeug (1) weist außerdem eine Betriebs- und Feststellbremse auf.

Am Fahrgestell (2) können eine oder mehrere vorbereitete Wagenheberaufnahmen (35) angeordnet sein, an denen ein bodenseitig abgestützter Wagenheber zum Anheben des Fahrzeugs (1) angesetzt und formschlüssig in Eingriff gebracht werden kann. In Figur 1 ist eine solche z.B. schalenförmige Wagenheberaufnahmen (35) im Frontbereich des Fahrgestells (2) schematisch angedeutet. Sie befindet sich z.B. unter der Fahrerkabine (30). Eine oder mehrere Wagenheberaufnahmen (35) können auch an anderen Stellen des Chassis (2) angeordnet sein. Zudem kann eine Halterung zum Mitführen des unbenutzten Wagenhebers am Fahrzeug (1) angeordnet sein.

Das Fahrgestell (2) kann sich in mehrere Fahrgestellteile (16,20,22) unterteilen. Dies können z.B. das frontseitige Zugkopfchassis (16) und das Anbauchassis (18) oder bei einer einteiligen Chassisausführung der vordere Fahrgestellteil (16) sowie ein hinterer Chassisbereich sein. Das Anbauchassis (18) und der hintere Chassisbereich weisen jeweils eine Achsanordnung (26) auf.

Das Anbauchassis (18) und der hintere Chassisbereich können sich ihrerseits unterteilt sein. Sie können einen hinter der Achsanordnung (26) angeordneten Fahrgestellteil (20), z.B. eine sogenannte Heckverlängerung, aufweisen. Ein zwischen Zugkopfchassis (16) bzw. vorderem Fahrgestellteil (16) angeordneter Fahrgestellteil (22) kann von Längsträgern gebildet werden. Ein weiteres Fahrgestellteil (28) kann von einem Achsbock der hinteren Achsanordnung (26) gebildet werden.

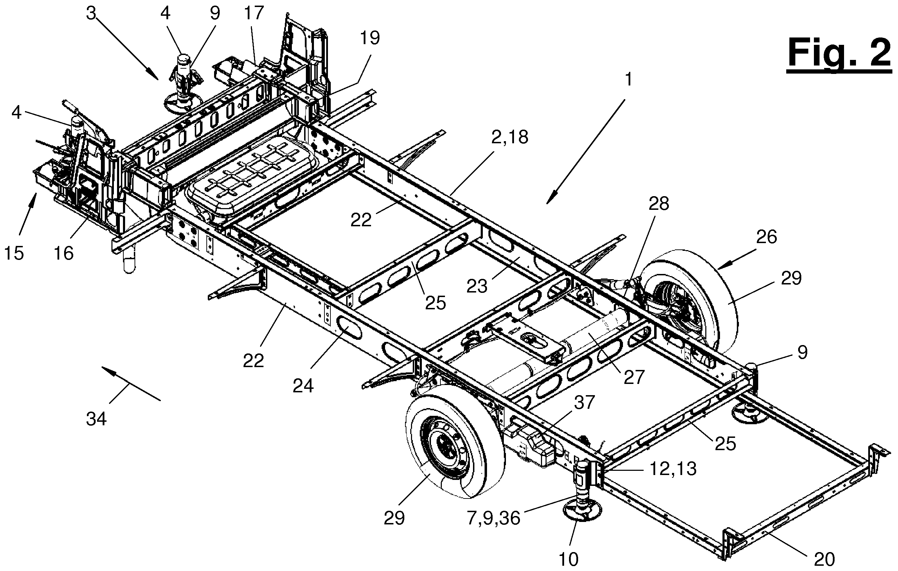

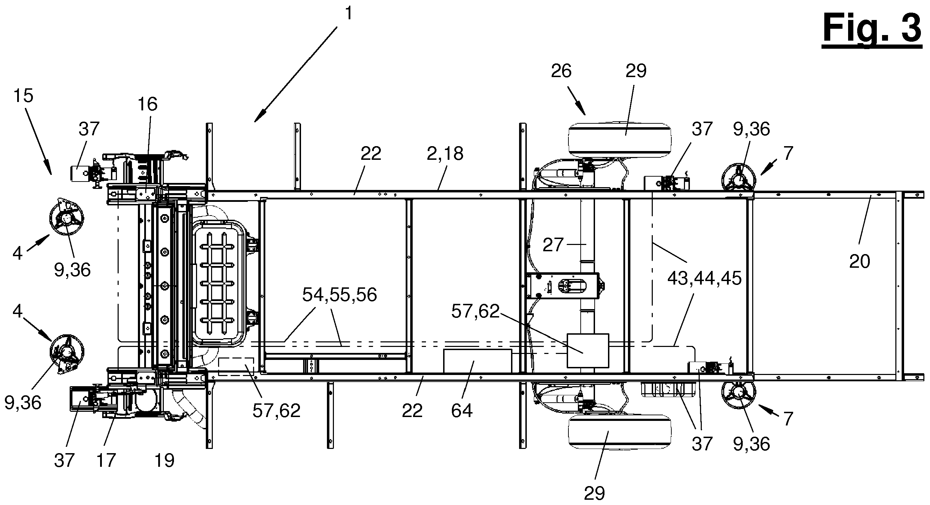

Die Längsträger (22) können z.B. gemäß Figur 2 und 3 parallel angeordnet sein und eine gerade Erstreckung aufweisen. Ferner ist eine Variante mit gebogenen Längsträgern (22) möglich. Die Längsträger (22) können in der ersten Variante von Figur 2 und 3 als dünnwandige und abgekantete Metallprofile ausgebildet sein, die z.B. einen aufrechten Mittelsteg (23) und einen unten und/oder oben anschließenden Quergurt aufweisen. Im Mittelsteg (23) können ein mehrere Stegöffnungen (24) zur Gewichtsersparnis angeordnet sein. Sie können länglich ausgebildet und entlang der Fahrtrichtung (34) ausgerichtet sein. In den gezeigten Ausführungsformen ist der jeweilige Längsträger (22) im Querschnitt als C-Profil ausgebildet. Alternativ sind andere Profilformen, z.B. L- oder Z-Profile, möglich. In einer nicht dargestellten Variante sind die Längsträger (22) als Hohlprofile, z.B. aufeinander gesetzte und längs miteinander verbundene Hutprofile, ausgebildet.

Die Längsträger (22) können durch ein oder mehrere Querträger (25) quer verbunden sein. Hierdurch kann ein Trägerrahmen, insbesondere ein Leiterrahmen, gebildet werden. Die Querträger (25) sind ebenfalls als Metallprofile ausgebildet. Die Längs- und Querträger (22,25) können z.B. aus Stahl oder einer Leichtmetalllegierung bestehen.

Das Fahrgestell (2) weist eine dezentrale hydraulische Hubstützenanordnung (3) auf, mit der das Fahrgestell (2) und das Fahrzeug (1) im Stand abgestützt und ggf. angehoben werden können, wobei die Räder (29) und die Achsen bzw. deren Federungen entlastet werden können. Die Hubstützenanordnung (3) kann mehrere autonome hydraulische Hubstützen (4,7) aufweisen.

Die hydraulischen Hubstützen (4,7) weisen jeweils eine ausfahrbare und zur eigenen Abstützung an einem Untergrund ausgebildete Stützeinheit (9) mit einem hydraulischen Aktor (36) und einer zugeordneten eigenen hydraulischen Versorgungseinheit (37) auf, die als separate und mit gegenseitiger Distanz am Straßenfahrzeug (1) eigenständig montierbare Einheiten ausgestaltet sind. Der hydraulische Aktor (36) und die hydraulische Versorgungseinheit (37) sind durch schlauchförmige und flexible hydraulische Leitungen (53) miteinander verbunden. Hierdurch wird ein geschlossener Hydraulikkreis gebildet. Am freien Ende der Stützeinheit (9) bzw. des hydraulischen Aktors (36) ist ein Stützteller (10) angeordnet.

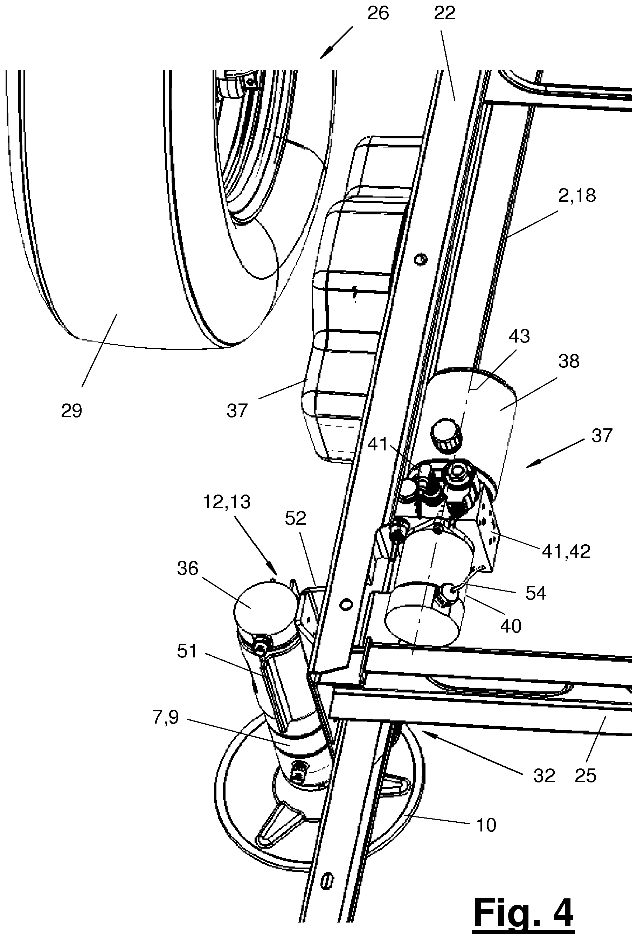

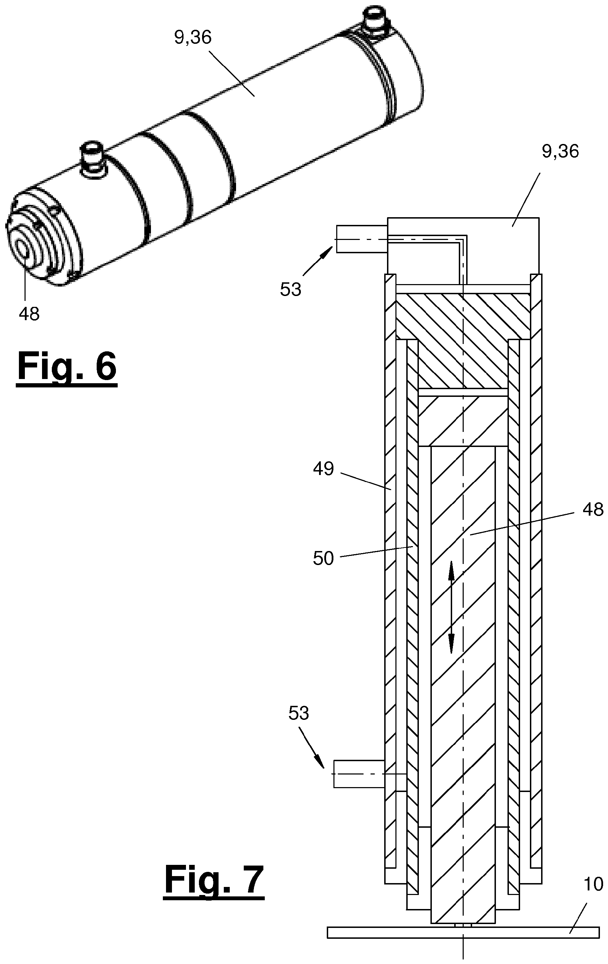

Figur 4 bis 7 verdeutlichen eine bevorzugte Ausführungsform des hydraulischen Aktors (36). Dieser ist als mehrstufig teleskopierbarer und beidseitig beaufschlagbarer hydraulischer Zylinder ausgebildet. Der Zylinder weist eine innere zentrale Kolbenstange (48) auf, die axial ein- und ausfahren kann und die mit ihrem Kolben in einem umgebenden Innenrohr (50) angeordnet ist. Das Innenrohr (50) wird seinerseits konzentrisch von einem relativ ortsfesten Außenrohr (49) umschlossen. Das Innenrohr (50) weist am oberen Ende einen Kolben auf. Am Außenrohr (49) sind mit axialer Distanz Leitungsanschlüsse angeordnet. Am freien Ende der Kolbenstange (48) ist der Stützteller (10) angeordnet.

Die Kolbenstange (48) und das Innenrohr (50) können ein- und ausfahren, vorzugsweise mit einer vorgegebenen Reihenfolge. Im Innenrohr (50) werden beidseits des Kolbens der Kolbenstange (48) hydraulische Arbeitsräume gebildet. Der Kolben ist beidseitig hydraulisch beaufschlagbar, wobei der obere Arbeitsraum mit dem oberen Leitungsanschluss am Außenrohr (48) und der untere Arbeitsraum mit dem unteren Leitungsanschluss am Außenrohr (48) verbunden ist. Zwischen dem Innenrohr (50) mit seinem Kolben und dem Außenrohr (49) werden ebenfalls obere und untere hydraulische Arbeitsräume gebildet, die zur beidseitigen Kolbenbeaufschlagung mit dem oberen und unteren Leitungsanschluss am Außenrohr (49) verbunden sind.

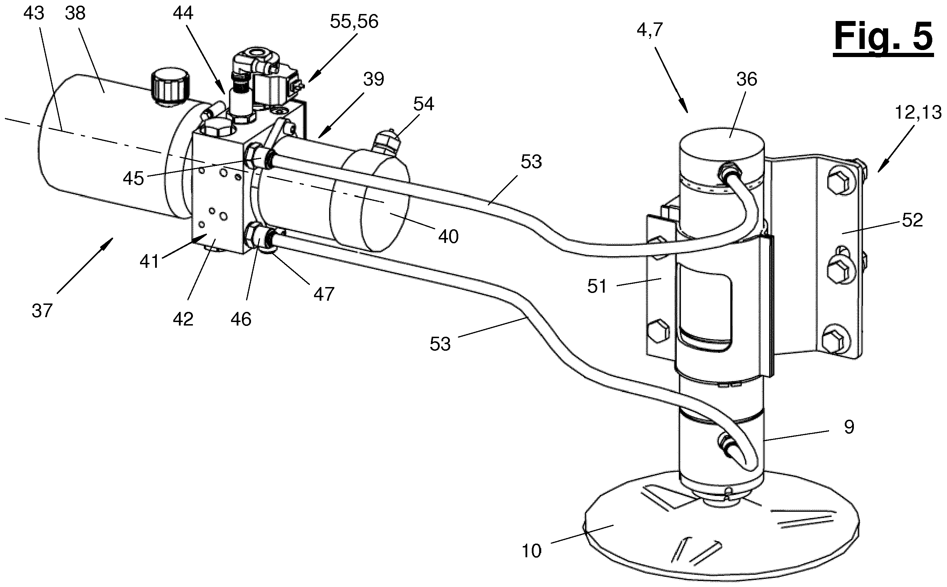

Die hydraulische Versorgungseinheit (37) ist in Figur 4 und 5 dargestellt. Sie weist eine Pumpenanordnung (39), einen geschlossenen Tank (38) mit Hydraulikflüssigkeit, vorzugsweise mit einer Lifetime-Füllung, eine Steueranordnung (41) und Leitungsanschlüsse (45,46) für die besagten hydraulischen schlauchartigen Leitungen (53) auf. Die hydraulische Versorgungseinheit (37) hat eine schlanke längliche Form. Die Pumpenanordnung (39), der Tank (38) und die Steueranordnung (41) sind dabei in einer Reihe hintereinander entlang einer Längsachse (43) der Versorgungseinheit (37) angeordnet.

Die Pumpenanordnung (39) weist einen ebenfalls axial ausgerichteten Pumpenantrieb (40) und eine Pumpeneinheit auf, die bevorzugt mit der Steueranordnung (41) in einem gemeinsamen, bevorzugt quaderförmigen Gehäuse (42) angeordnet ist. Der Pumpenantrieb (40) ist vorzugsweise als Elektromotor, z.B. als Gleichstrommotor mit Niederspannung von z.B. 12 Volt, insbesondere als Servomotor, ausgebildet.

Die hydraulische Versorgungseinheit (37), insbesondere die elektrisch angetriebene Pumpenanordnung (39), weist einen Stromanschluss für eine stromzuführende Leitung (54) und einen mit dem bevorzugt metallischen Fahrgestell (2) leitend verbindbaren Masseanschluss auf. Die stromzuführende Leitung (54) kann ohne Masseleiter auskommen und kann 1-polig ausgebildet sein.

Die Pumpenanordnung (39) kann beidseitig fördernd ausgebildet sein. Sie kann alternativ einseitig fördernd ausgebildet sein, wobei der geförderte Fluidstrom mit einem Steuerelement, z.B. einem 2/4-Wegeventil, umgeleitet wird. Durch die beidseitige Beaufschlagung des Zylinders bzw. seiner Kolben und den geschlossenen Hydraulikkreis kann die Hubstütze (4,7) aktiv und gesteuert einfahren und ausfahren. Der Tank (38) und der Hydraulikkreis sind bei eingefahrenem Zylinder vollständig mit Hydraulikflüssigkeit gefüllt. Durch den geschlossenen hydraulischen Kreis können die Ein- und Ausfahrbewegungen der hydraulischen Hubstütze (4,7) bzw. ihres hydraulischen Aktors (36) direkt über den Pumpenantrieb (40) und/oder das besagte Steuerelement gesteuert werden.

Die Steueranordnung (41) ist z.B. als steuerbare Ventilanordnung ausgebildet und im Gehäuse (42) angeordnet. Sie kann auch Blockademittel für die Zylinderbewegung, z.B. Rückschlagventile im Hydraulikkreis, und ggf. das besagte Steuerelement aufweisen. Die Leitungsanschlüsse (45,46) sind am Gehäuse (42) angeordnet. Sie sind gemeinsam an einer Stirnseite der Steueranordnung (41) bzw. des Gehä4 uses (42) angeordnet und sind dabei entlang der Längsachse (43) ausgerichtet. Die Leitungsanschlüsse (45,46) können drehbare Leitungskupplungen für den Anschluss der Hydraulikleitungen (53) aufweisen. Die Hydraulikleitungen (53) können gerade oder über Kreuz geführt sein.

Die hydraulische Versorgungseinheit (37) wird bevorzugt mit liegender Ausrichtung am Fahrgestell (2) montiert. Die Montage erfolgt bevorzugt an einem Längsträger (22) des Fahrgestells (2), wobei die Anbaulage innen oder außen am Längsträger (22) sein kann. Die Längsachse (43) der hydraulischen Versorgungseinheit (37) ist bevorzugt parallel zur Längsachse des Fahrgestells (2) ausgerichtet. Die Leitungsanschlüsse (45,46) weisen zum hydraulischen Aktor (36). Die Montage kann über das Gehäuse (42) der Steueranordnung (41), insbesondere über eine Verschraubung, erfolgen. Die hydraulische Versorgungseinheit (37) kann mit einer abnehmbaren Haube abgedichtet umschlossen werden.

Die hydraulische Hubstütze (4,7) kann einen Sensor (44) zur Detektion eines Bodenkontakts beim Ausfahren aufweisen. Der Sensor (44) kann in beliebig geeigneter Weise ausgebildet sein. In der gezeigten Ausführungsform ist er als Drucksensor ausgebildet und im geschlossenen Hydraulikkreis der hydraulischen Hubstütze (4,7) angeordnet. Der Drucksensor (44) ist z.B. an der hydraulischen Auslassseite der Steueranordnung (41) angeordnet. Er kann dabei im Gehäuse (42) in dem zum auslassseitigen Leitungsanschluss (45) führenden Strömungskanal angeordnet sein. Die hydraulische Hubstütze (4,7) weitere und ggf. auch andere Sensoren zur Funktionsüberwachung aufweisen.

Die hydraulische Versorgungseinheit (37) kann einen im Notfall lösbaren Fluidablass (47) im Hydraulikkreis aufweisen. Der Fluidablass (47) kann an beliebig geeigneter Stelle angeordnet sowie einzeln oder mehrfach vorhanden sein. Er kann z.B. an der Pumpenanordnung (39) und/oder an der Steueranordnung (41) angeordnet sein. In der gezeigten Ausführungsform befindet er sich gemäß Figur 5 an der Unterseite des Gehäuses (42). Mit dem Ablass (47) wird ein Bypass im Hydraulikkreis geöffnet, über den die Hydraulikflüssigkeit abgelassen und die Sperrfunktion von Rückschlagventilen im Hydraulikkreis umgangen werden kann.

Die hydraulische Hubstütze (4,7) weist einen Träger (12) und einen Montagebeschlag (13) für den hydraulischen Aktor (36) auf. Diese sind dazu ausgebildet, den hydraulischen Aktor (36) starr aufzunehmen und relativ ortsfest am Straßenfahrzeug (1), insbesondere am Fahrgestell (2) zu fixieren. Die Hubstütze (4,7) führt nur eine lineare und axiale Einfahr- und Ausfahrbewegung aus. Der Träger (12) und der Montagebeschlag (13) sind lösbar miteinander verbunden. Der Montagebeschlag (13) kann ausgetauscht und an unterschiedliche Anbaustellen am Straßenfahrzeug (1) bzw. am Fahrgestell (2) adaptiert werden. Der Träger (12) kann belassen werden. Er weist eine formschlüssige Aktoraufnahme (51) auf, die z.B. als eine an die Aktorkontur adaptierte Klemmschale ausgebildet sein kann. Gemäß Figur 4 und 5 kann der Montagebeschlag (13) eine ebenfalls an die Aktorkontur adaptierte Klemmschale aufweisen. Er weist ferner eine an unterschiedliche Anbaustellen am Straßenfahrzeug (1), insbesondere am Fahrgestell (2), angepasste Montagekonsole (52) auf. Die Trennstelle zwischen Träger (12) und Montagebeschlag (13) kann an der Verbindungsstelle, insbesondere der Verschraubung, der beiden Klemmschalen liegen. In einer anderen Variante kann der Träger (12) den hydraulischen Aktor (36) vollständig aufnehmen und auf andere Weise mit dem austauschbaren Montagebeschlag (13) verbunden sein.

In den verschiedenen Varianten nehmen der Träger (12) allein oder im Zusammenwirken mit dem Montagebeschlag (13) den hydraulischen Aktor (36) mit seinem z.B. zylindrischen Gehäuse formschlüssig auf, wobei eine Führung und Sicherung bestehen, die eine Verdrehung und eine axiale Verschiebung des Aktorgehäuses verhindern.

Die dezentrale hydraulische Hubstützenanordnung (3) weist mehrere, insbesondere vier, hydraulische und autonome Hubstützen (4,7) mit einer gemeinsamen Steuereinrichtung (57) auf. Die Hubstützen (4,7) können jeweils einen hydraulischen Aktor (36) und eine zugeordnete eigene hydraulische Versorgungseinheit (37) aufweisen, die in der vorbeschriebenen Weise getrennt voneinander angeordnet und durch schlauchförmige hydraulische Leitungen (53) miteinander verbunden sind. In einer anderen Variante können sie gemeinsam in einem Gehäuse angeordnet sein, z.B. entsprechend der eingangs genannten US 2011/0024706 A1.

Die Steuereinrichtung (57) weist eine integrierte elektrische Leistungs-Endstufe (61) für die Stromversorgung der elektrischen Pumpenantriebe (40) der hydraulischen autonomen Hubstützen (4,7) auf. Die Steuereinrichtung (57) ist an die elektrische Energieversorgung (64), z.B. eine Batterie oder einen Akku, angeschlossen. Dies kann die bordeigene Energieversorgung (64) des Straßenfahrzeugs (1) oder eine andere und z.B. der Hubstützenanordnung (3) zugeordnete Energieversorgung sein.

Die Steuereinrichtung (57) versorgt über die Endstufe (61) die Hubstützen (4,7), insbesondere deren jeweiligen elektrischen Pumpenantrieb (40), einzeln und individuell mit Strom. Die Steuereinrichtung (57) kann die Hubstützen (4,7) einzeln und individuell unter Prüfung ihres Bodenkontakts steuern. Die Steuereinrichtung (57) kann ferner individuell die an die elektrischen Pumpenantriebe (40) abgegebenen Ströme erfassen. Sie kann auch mittels der Stromerfassung die Endlagen der hydraulischen Hubstützen (4,7), bzw. ihrer hydraulischen Aktoren (36) detektieren.

Die Leistungs-Endstufe ist bevorzugt als Halbleiter-Endstufe ausgeführt. Die Steuereinrichtung (57) weist ferner eine Steuereinheit (60), insbesondere eine Steuerelektronik mit ein oder mehreren Mikroprozessoren, Datenspeichern und Steuersoftware auf. Die Leistungs-Endstufe (61) und die bevorzugt programmierbare Steuereinheit (60) können gemeinsam auf einer einzelnen Steuerplatine (59) angeordnet sein. Die besagte Stromerfassung kann von der Steuereinheit (60) und/oder der halbleitergesteuerten Leistungs-Endstufe (61) mit geeigneten Mitteln durchgeführt werden. Ferner kann eine Diagnose-Software vorhanden sein.

Die Steuereinrichtung (57) ist mit den einen Bodenkontakt detektierenden Sensoren (44), insbesondere den Drucksensoren, der Hubstützen (4,7) signaltechnisch verbunden. Die Steuereinrichtung (57) steuert die hydraulischen Hubstützen (4,7) jeweils einzeln und in Abhängigkeit vom Sensorsignal des Sensors (44) und vom detektierten Motorstrom des jeweiligen elektrischen Pumpenantriebs (40). Die Erfassung der Motorströme kann auf beliebig geeignete Weise, z.B. an der Leistungs-Endstufe (61) oder an der Steuereinheit bzw. Steuerelektronik (60) erfolgen. Generell kann die Steuereinrichtung (57) mit Drucksensoren in einem Hydraulikkreis der Hubstützen (4,7) signaltechnisch verbunden sein und kann die mit Bodenkontakt ausgefahrenen sowie ggf. nivellierten hydraulischen Hubstützen (4,7) auf ein untereinander abgestimmtes hydraulisches Druckverhältnis, insbesondere auf einen gleichen hydraulischen Druck, steuern. Dies kann z.B. während oder nach der Nivellierung erfolgen. Alternativ können andere abgestimmte Druckverhältnisse eingestellt werden.

Die Steuereinrichtung (57) kann eine integrierte Nivelliereinrichtung (62) zur Einstellung der gewünschten Lage und Neigung des Fahrgestells (2) aufweisen. Die Nivelliereinrichtung (62) beinhaltet eine Erfassungseinrichtung (63) für die Fahrzeuglage, insbesondere die Fahrgestellneigung. Diese kann in beliebig geeigneter Weise, z.B. als elektrische Libelle oder als andere elektrische Neigungssensoren, insbesondere Beschleunigungssensoren, ausgebildet sein. Die Verarbeitung der Erfassungs- und Neigungssignale kann in einer eigenständigen Steuereinheit der Nivelliereinrichtung (62) oder in der Steuereinheit (60) bzw. Steuerelektronik der Steuereinrichtung (57) erfolgen. Die Erfassungseinrichtung (63) ist vorzugsweise ebenfalls auf der gemeinsamen Steuerplatine (59) angeordnet. Sie kann sich alternativ an anderer Stelle befinden.

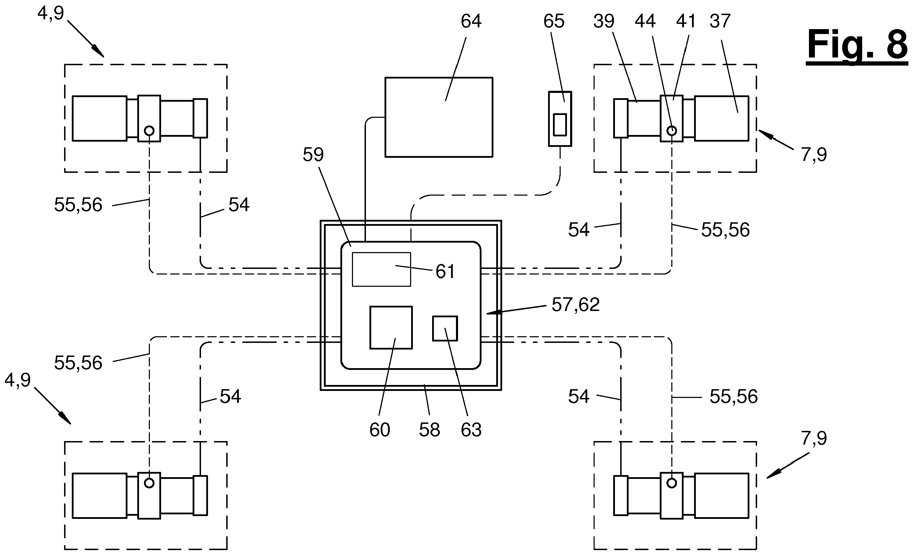

Die Steuereinrichtung (57) ist schematisch in Figur 8 dargestellt. Die Steuereinheit (60) ist über Leitungen (55) mit den Steuerungsanordnungen (41) und über Leitungen (56) mit den Sensoren (44) der hydraulischen Hubstützen (4,7) verbunden. Die Leitungen (55,56) können Steuerleitungen bzw. Signalleitungen sein. Die Endstufe (61) ist über die Stromleitungen (54) mit den Pumpenantrieben (40) verbunden.

Die Steuereinrichtung (57), insbesondere ihre Steuereinheit (60), ist mit ein oder mehreren externen Bediengeräten (65) per Kabel oder drahtlos verbunden. Hierfür weisen das Bediengerät (65) und die Steuereinheit (60) entsprechende Kommunikaitonseinheiten mit Sende- und Empfangsteil auf. Eine drahtlose Kommunikation kann z.B. per Funk erfolgen.

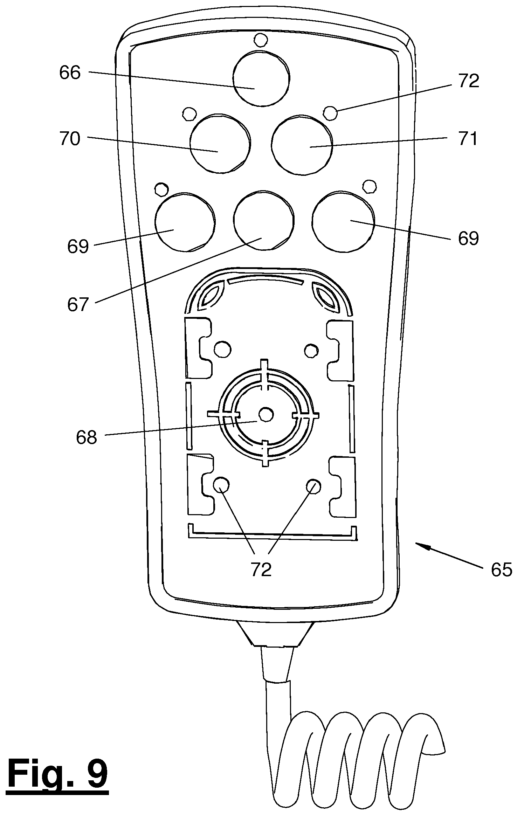

Das in Figur 9 dargestellte Bediengerät (65) kann stationär am Straßenfahrzeug (1) oder mobil angeordnet sein. Es kann z.B. eine Fernbedienung mit Kabel oder mit drahtloser Kommunikaiton darstellen. Das Bediengerät (65) weist mehrere Eingabeelemente (67,68,69) für eine wahlweise manuelle Bedienung oder eine automatische Nivellierung auf. Die Umschaltung erfolgt über die Eingabeelemente (67,68). Bei manueller Bedienung können mit den Bedienelementen (69) die Hubstützen (4,7) ein- und ausgefahren werden. Ferner kann ein Eingabeelement (66) für das Ein- und Ausschalten des Bediengeräts (65) sowie ggf. für einen Nothalt vorhanden sein.

Mit Eingabeelementen (70,71) können ein oder oder mehrere Sonderpositionen, vorzugsweise Neigungen, des Straßenfahrzeugs (1), insbesondere des Fahrgestells (2), angewählt werden. Diese Sonderpositionen können vorprogrammiert oder vom Nutzer eingelernt und gespeichert werden. Sonderpositionen können unterschiedliche Neigungen für eine besonders gute Schlafstellung oder für eine Tankentleerung oder für andere Zwecke, z.B. zur Neigungsanpassung für eine heckseitige Auffahrrampe, sein.

Das Bediengerät (65) kann ferner eine oder mehrere Anzeigen (72) aufweisen, die optisch, akustisch, haptisch oder in anderer Weise signalisieren. Sie können Quittungssignale bei der Betätigung von Eingabeelementen (66-71) ausgeben und/oder in einer Schemadarstellung des Fahrgestells die beaufschlagten Hubstütze(n) (4,7) anzeigen. Ferner können Warn- und Zustandmeldungen und komplexere Informationen auf andere, nicht dargestellte Weise, z.B. über ein Display, dem Bediener mitgeteilt werden.

Die Steuereinrichtung (57) und ihre vorgenannten Komponenten können in einem abgedichteten Gehäuse (58) angeordnet sein. Das Gehäuse (58) kann für eine Montage an einem bevorzugt metallischen Fahrgestell (2) adaptiert und ausgebildet sein. Am Gehäuse (58) befinden sich abgedichtete Leitungsanschlüsse für die Leitungen (54,55,56). Die Steuereinrichtung (57) kann mit dem Gehäuse (58) an einer geeigneten Stelle im und am Fahrgestell (2) montiert werden. Figur 3 zeigt beispielhaft eine Montage an der Achsanordnung (26), insbesondere am Achskörper (27). Alternativ ist eine Montage am Anbauchassis (18) im Bereich des Adapters (19) möglich. Diese Anbaulage ist in Figur 3 gestrichelt dargestellt. Das Gehäuse (58) kann dabei an einem Längsträger (22) und insbesondere in dessen Längsträger (22) innenseitig oder außenseitig befestigt, insbesondere angeschraubt sein. Es kann dabei in der seitlichen Profilöffnung des Längsträgers (22) aufgenommen sein.

Die dezentrale hydraulische Hubstützenanordnung (3) kann als Baukastensystem ausgebildet sein. Sie kann einerseits weitgehend vereinheitlicht sein und kann andererseits an unterschiedliche Fahrzeuge (1) bzw. Fahrgestelle (2) und an variierende Anbaustellen durch geeignete Montagebeschläge (13) adaptiert werden. Die Hubstützenanordnung (3) kann dabei untereinander gleiche hydraulische Aktoren (36) und gleiche zugeordnete hydraulische Versorgungseinheiten (37) sowie gleiche Träger (12) aufweisen. Ferner sind individuelle Montagebeschläge (13) vorgesehen, die an die Anbausituation am jeweiligen Straßenfahrzeug (1), insbesondere am Fahrgestell (2) adaptiert sind.

In Figur 1 bis 4 sind Ausführungsbeispiele mit Anbaumöglichkeiten für Hubstützen (4,7) als beispielhafter Überblick dargestellt. Die Hubstützen (4,7) sind vorzugsweise in Fahrtrichtung (34) beidseits am Fahrgestell (2) angeordnet und bilden ein Hubstützenpaar. Vorzugsweise weist die Hubstützenanordnung (3) zwei solcher Paare auf, die im Front- und Heckbereich des Fahrgestells (2) angeordnet sind. Die Zahl der Paare kann alternativ größer sein.

Die Hubstützenanordnung (3) umfasst z.B. eine vordere und bevorzugt paarweise beidseits angeordnete Hubstütze (4) auf, die am vorderen Fahrgestellteil bzw., Zugkopfchassis (16) angeordnet ist. Sie befindet sich z.B. an der Einstiegsstelle (31) zu einer Fahrerkabine (30). Sie stützt den vorderen Fahrzeugbereich ab. Die Hubstütze (4) ist vorzugsweise von der Fahrzeugaußenseite quer zur Fahrtrichtung (34) nach innen zurückversetzt und befindet sich unter der Einstiegsstelle (31). Vorzugsweise ist sie unter der Trittstufe an der Einstiegsstelle (30) angeordnet. Die Hubstütze (4) kann an einem axialen Unterzug (17) bzw. Schweller des vorderen Fahrgestellteils (16) angeordnet und zusätzlich an einem Dom abgestützt sein. Dieser Unterzug (17) kann z.B. von einem Längsträger und/oder einem Querträger des vorderen Fahrgestellteils (16) bzw. Zugkopfchassis gebildet werden.

Die dezentrale hydraulische Hubstützenanordnung (3) kann alternativ oder zusätzlich eine Hubstütze (7) umfassen, die an einer gemeinsamen Verbindungsstelle (32) von mehreren Fahrgestellteilen (20,22,28) montiert ist. Die gemeinsame Verbindungsstelle (32) verbindet die Hubstütze mit diesen Fahrgestellteilen (20,22,28) und letztere untereinander. Für die Ausgestaltung dieser Anordnung gibt es verschiedene Möglichkeiten.

Gemäß Figur 1 bis 4 kann eine Hubstütze (7) an einer gemeinsamen Verbindungsstelle (32) von einem Längsträger (22) und einer Heckverlängerung (20) montiert sein. Der Längsträger (22) und ein Längsträger der Heckverlängerung (20) können hierbei direkt miteinander verbunden sein, z.B. in gegenseitiger Überlappung, wobei an dieser Verbindungsstelle (32) auch die Hubstütze (7) montiert werden kann. Die besagten Längsträger liegen dabei im Wesentlichen auf gleicher Höhe. Zudem ist ein Querträger (25) benachbart angeordnet und kann Querkräfte zusätzlich abstützen.

Die hydraulischen Hubstützen und die Fahrgestellteile (22,28) können gemeinsame Verbindungselemente, z.B. Schauben, Nieten oder dgl., benutzen. An der gemeinsamen Verbindungsstelle (32) kann außerdem eine herstellerseitig definierte Schnittstelle vorhanden sein. Die Krafteinleitung kann durch verformte und formschlüssig ineinander greifende Verbindungselemente, z.B. Napfverschraubungen, Bördelkrägen mit Eingriff in Schrauböffnungen oder dgl. zusätzlich stabilisiert werden.

In einer anderen, nicht dargestellten Variante kann eine Hubstütze an einer gemeinsamen Verbindungsstelle von einem Achsträger (22) und einem Achsbock (28) der hinteren Achsanordnung (26) montiert sein. Ferner ist die Montage einer Hubstütze an einer gemeinsamen Verbindungsstelle von einem Längsträger (22) und einer zu diesem höhenversetzten Heckverlängerung (20) möglich. In einer weiteren alternativen oder zusätzlichen Variante kann die besagte Hubstützenanordnung (3) eine Hubstütze umfassen, die an einer Stegöffnung (24) am aufrechten Trägersteg (23) eines Längsträgers (22) montiert ist.

Vorzugsweise weist die dezentrale hydraulische Hubstützenanordnung (3) eine vordere Anordnung von einem Paar Hubstützen (4) an der Einstiegsstelle (31) und eine hintere Anordnung von einem Paar der gezeigten heckseitigen Hubstützen (7) oder einer der vorgenannten Varianten auf.

Der Montage- oder Anbaubeschlag (13) kann an eine gemeinsame Verbindungsstelle (32) von mehreren Fahrgestellteilen (20,22,28) adaptiert sein. Er kann hierfür z.B. ein an die Verbindungsstelle und an deren Schnittstelle bzw. Schraubbild angepasstes Lochbild aufweisen. Der Montagebeschlag (13) mit den bereits an der Verbindungsstelle (32) vorhandenen Verbindungsmitteln, insbesondere Verschraubungen, montiert werden. Er kann alternativ oder zusätzlich eigene Verbindungsmittel, insbesondere Verschraubungen aufweisen.

### BEZUGSZEICHENLISTE

- 1: Fahrzeug, Straßenfahrzeug
- 2: Fahrgestell, Chassis
- 3: Hubstützenanordnung
- 4: Hubstütze an Fahrerkabine
- 5:
- 6:
- 7: Hubstütze an Heckbereich
- 8:
- 9: Stützeinheit
- 10: Stützteller
- 11:
- 12: Träger
- 13: Anbaubeschlag
- 14:
- 15: Zugkopf
- 16: Fahrgestellteil vorn, Zugkopfchassis
- 17: Unterzug
- 18: Anbauchassis
- 19: Adapter
- 20: Fahrgestellteil hinten, Heckteil, Heckverlängerung
- 21:
- 22: Fahrgestellteil, Längsträger
- 23: Trägersteg
- 24: Stegöffnung
- 25: Querträger
- 26: Achsanordnung, Radlenkerachse
- 27: Achskörper, Achsrohr
- 28: Fahrgestellteil, Achsbock
- 29: Rad
- 30: Fahrerkabine
- 31: Einstiegstelle, Stufe
- 32: Verbindungsstelle
- 33: Aufbau
- 34: Fahrtrichtung, Fahrzeuglängsachse
- 35: Wagenheberaufnahme
- 36: Aktor, teleskopierbarer Zylinder
- 37: Versorgungseinheit
- 38: Tank für Hydraulikflüssigkeit
- 39: Pumpenanordnung
- 40: Pumpenantrieb, Motor
- 41: Steueranordnung, Ventilanordnung
- 42: Gehäuse
- 43: Längsachse
- 44: Sensor, Drucksensor
- 45: Leitungsanschluss, Auslass
- 46: Leitungsanschluss, Einlass
- 47: Ablass
- 48: Kolbenstange
- 49: Außenrohr
- 50: Innenrohr
- 51: Aktoraufnahme, Klemmschale
- 52: Montagekonsole
- 53: Leitung für Hydraulikflüssigkeit
- 54: Leitung, Energieversorgung
- 55: Leitung, Steuerleitung
- 56: Leitung, Signalleitung
- 57: Steuereinrichtung
- 58: Gehäuse
- 59: Steuerplatine
- 60: Steuereinheit, Steuerelektronik
- 61: Endstufe
- 62: Nivelliereinrichtung
- 63: Erfassungseinrichtung für Neigung
- 64: Energieversorgung, Akku
- 65: Bediengerät, Fernbedienung
- 66: Eingabeelement, Ein/Aus, Nothalt
- 67: Eingabeelement für manuelle Bedienung
- 68: Eingabeelement für automatische Nivellierung
- 69: Eingabeelement für Stützenbetätigung
- 70: Eingabeelement für Sonderposition
- 71: Eingabeelement für Sonderposition
- 72: Anzeigeelement

## Patentansprüche

1. Hubstützenanordnung für ein motorisiertes Straßenfahrzeug (1) mit einem Fahrgestell (2), insbesondere für Wohn-, Verkaufs- oder Sondermobile, wobei die Hubstützenanordnung (3) mehrere, insbesondere vier, hydraulische und autonome Hubstützen (4,7) mit einer jeweils zugeordneten eigenen hydraulischen Versorgungseinheit (37) und mit einer gemeinsamen Steuereinrichtung (57) aufweist, **dadurch gekennzeichnet, dass** die Steuereinrichtung (57) eine integrierte elektrische Leistungs-Endstufe (61), insbesondere Halbleiter-Endstufe, für die Stromversorgung der hydraulischen autonomen Hubstützen (4,7), insbesondere ihrer jeweiligen elektrischen Pumpenantriebe (40), aufweist.

2. Hubstützenanordnung nach Anspruch 1, **dadurch gekennzeichnet, dass** die Steuereinrichtung (57) eine Steuereinheit (60), insbesondere eine Steuerelektronik, aufweist, wobei die Steuereinheit (60) und die elektrische Leistungs-Endstufe (61) bevorzugt gemeinsam auf einer einzelnen Steuerplatine (59) angeordnet sind.

3. Hubstützenanordnung nach Anspruch 1 oder2, **dadurch gekennzeichnet, dass** die Steuereinrichtung (57) die Hubstützen (4,7), insbesondere deren elektrischen Pumpenantrieb (40), einzeln und individuell mit Strom versorgt.

4. Hubstützenanordnung nach Anspruch 1, 2 oder 3, **dadurch gekennzeichnet, dass** die Steuereinrichtung (57) die Hubstützen (4,7) einzeln und individuell unter Prüfung ihres Bodenkontakts steuert.

5. Hubstützenanordnung nach einem der vorhergehenden Ansprüche, **dadurch gekennzeichnet, dass** die Steuereinrichtung (57) individuell die an die Hubstützen (4,7), insbesondere deren elektrischen Pumpenantrieb (40), abgegebenen Ströme erfasst.

6. Hubstützenanordnung nach Anspruch 5, **dadurch gekennzeichnet, dass** die Steuereinrichtung (57) mittels der Stromerfassung die Endlage von einem jeweiligen hydraulischen Aktor (36) der hydraulischen autonomen Hubstütze (4,7) detektiert.

7. Hubstützenanordnung nach einem der vorhergehenden Ansprüche, **dadurch gekennzeichnet, dass** hydraulischen Hubstützen (4,7) jeweils eine ausfahrbare und zur eigenen Abstützung an einem Untergrund ausgebildete Stützeineinheit (9) mit einem hydraulischen Aktor (36) und einer zugeordneten eigenen hydraulischen Versorgungseinheit (37) aufweist, wobei der hydraulische Aktor (36) und die hydraulische Versorgungseinheit (37) als separate und mit gegenseitiger Distanz am Straßenfahrzeug (1) eigenständig montierbare Einheiten ausgestaltet und durch schlauchförmige hydraulische Leitungen (53) miteinander verbunden sind.

8. Hubstützenanordnung nach einem der vorhergehenden Ansprüche, **dadurch gekennzeichnet, dass** die Steuereinrichtung (57) mit einen Bodenkontakt detektierenden Sensoren (44), insbesondere Drucksensoren, der Hubstützen (4,7) signaltechnisch verbunden ist und die Hubstützen (4,7) jeweils einzeln und in Abhängigkeit vom Sensorsignal und vom detektierten Motorstrom ihres elektrischen Pumpenantriebs (40) steuert.

9. Hubstützenanordnung nach einem der vorhergehenden Ansprüche, **dadurch gekennzeichnet, dass** die Steuereinrichtung (57) mit Drucksensoren in einem Hydraulikkreis der Hubstützen (4,7) signaltechnisch verbunden ist und die mit Bodenkontakt ausgefahrenen sowie ggf. nivellierten Hubstützen (4,7) auf ein untereinander abgestimmtes hydraulisches Druckverhältnis, insbesondere auf einen gleichen hydraulischen Druck, steuert.

10. Hubstützenanordnung nach einem der vorhergehenden Ansprüche, **dadurch gekennzeichnet, dass** die Steuereinrichtung (57) eine integrierte Nivelliereinrichtung (62) mit einer Erfassungseinrichtung (63) für die Fahrzeuglage, insbesondere Fahrgestellneigung, aufweist.

11. Fahrgestell für motorisierte Straßenfahrzeuge (1), wobei das Fahrgestell (2) eine dezentrale Hubstützenanordnung (3) mit mehreren hydraulischen autonomen Hubstützen aufweist, die jeweils einen hydraulischen Aktor (36) mit einer zugeordneten eigenen hydraulischen Versorgungseinheit (37) aufweisen, **dadurch gekennzeichnet, dass** die Hubstützenanordnung (3) nach einem der Ansprüche 1 bis 10 ausgebildet ist.

12. Fahrgestell nach Anspruch 11, **dadurch gekennzeichnet, dass** die hydraulischen Aktoren (36) und ihre jeweilige hydraulische Versorgungseinheit (37) separat und mit gegenseitiger Distanz am Fahrgestell (2), insbesondere an der Innenseite und/oder Außenseite von Längsträgern (22) des Fahrgestells (2), montiert und durch schlauchförmige hydraulische Leitungen (53) miteinander verbunden sind.

13. Straßenfahrzeug mit einem Fahrantrieb, einem Fahrgestell (2) und einer dezentralen Hubstützenanordnung (3) mit mehreren hydraulischen autonomen Hubstützen, **dadurch gekennzeichnet, dass** das Fahrgestell (2) nach mindestens einem der Ansprüche 11 oder 12 ausgebildet ist, wobei die Steuereinrichtung (57) an die Stromversorgung des Straßenfahrzeugs angeschlossen ist.

14. Verfahren zum Betrieb einer dezentralen Hubstützenanordnung für ein motorisiertes Straßenfahrzeug (1) mit einem Fahrgestell (2), insbesondere für Wohn-, Verkaufs- oder Sondermobile, wobei die Hubstützenanordnung (3) mehrere, insbesondere vier, hydraulische und autonome Hubstützen (4,7) mit einer jeweils zugeordneten eigenen hydraulischen Versorgungseinheit (37) und mit einer gemeinsamen Steuereinrichtung (57) aufweist, **dadurch gekennzeichnet, dass** die hydraulischen autonomen Hubstützen (4,7), insbesondere ihre elektrischen Pumpenantriebe (40), von der Steuereinrichtung (57) mit einer integrierten elektrischen Leistungs-Endstufe (61), insbesondere Halbleiter-Endstufe, mit Strom versorgt werden.

15. Verfahren nach Anspruch 14, **dadurch gekennzeichnet, dass** eine hydraulische autonome Hubstütze (4,7) mit variablen Geschwindigkeiten, insbesondere im Schnellgang und im Schleichgang, ein- und ausgefahren wird.

## Claims

1. Lifting support assembly for a motorized road vehicle (1) having a chassis (2), in particular for mobile homes, sales vehicles or special purpose vehicles, wherein the lifting support assembly (3) has a plurality of, in particular four, hydraulic and autonomous lifting supports (4, 7) with a respectively assigned separate hydraulic supply unit (37) and with a common control device (57), **characterized in that** the control device (57) has an integrated electrical power output stage (61), in particular semiconductor output stage, for supplying power to the hydraulic autonomous lifting supports (4, 7), in particular to their respective electric pump drives (40).

2. Lifting support assembly according to Claim 1, **characterized in that** the control device (57) has a control unit (60), in particular control electronics, wherein the control unit (60) and the electrical power output stage (61) are preferably arranged together on a separate control circuit board (59).

3. Lifting support assembly according to Claim 1 or 2, **characterized in that** the control device (57) supplies the lifting supports (4, 7), in particular their electric pump drive (40), with current separately and individually.

4. Lifting support assembly according to Claim 1, 2 or 3, **characterized in that** the control device (57) controls the lifting supports (4, 7) separately and individually while checking their ground contact.

5. Lifting support assembly according to one of the preceding claims, **characterized in that** the control device (57) individually senses the currents which are output to the lifting supports (4, 7), in particular to their electric pump drive (40) .

6. Lifting support assembly according to Claim 5, **characterized in that** the control device (57) detects the end position of a respective hydraulic actuator (36) of the hydraulic autonomous lifting support (4, 7) by means of the sensing of current.

7. Lifting support assembly according to one of the preceding claims, **characterized in that** hydraulic lifting supports (4, 7) each have an extendable supporting unit (9) which is designed to support itself on an underlying surface and has a hydraulic actuator (36) and an assigned separate hydraulic supply unit (37), wherein the hydraulic actuator (36) and the hydraulic supply unit (37) are configured as separate units, which can be mounted independently at a mutual distance on the road vehicle (1), and are connected to one another by means of hose-shaped hydraulic lines (53).

8. Lifting support assembly according to one of the preceding claims, **characterized in that** the control device (57) is connected in terms of signal technology to sensors (44) which detect ground contact, in particular pressure sensors, of the lifting supports (4, 7), and controls the lifting supports (4, 7) in each case separately and as a function of the sensor signal and of the detected motor current of its electric pump drive (40) .

9. Lifting support assembly according to one of the preceding claims, **characterized in that** the control device (57) is connected in terms of signal technology to pressure sensors in a hydraulic circuit of the lifting supports (4, 7), and controls the lifting supports (4, 7), which are extended and, if appropriate, levelled with ground contact, to a hydraulic pressure ratio which is matched to one another, in particular to the same hydraulic pressure.

10. Lifting support assembly according to one of the preceding claims, **characterized in that** the control device (57) has an integrated levelling device (62) with a sensing device (63) for the attitude of the vehicle, in particular for the inclination of the chassis.

11. Chassis for motorized road vehicles (1), wherein the chassis (2) has a decentralized lifting support assembly (3) with a plurality of hydraulic autonomous lifting supports which each have a hydraulic actuator (36) with an assigned separate hydraulic supply unit (37), **characterized in that** the lifting support assembly (3) is embodied according to one of Claims 1 to 10.

12. Chassis according to Claim 11, **characterized in that** the hydraulic actuators (36) and their respective hydraulic supply unit (37) are mounted separately and at a mutual distance on the chassis (2), in particular on the inside and/or outside of longitudinal members (22) of the chassis (2), and are connected to one another by means of hose-shaped hydraulic lines (53).

13. Road vehicle having a traction drive, a chassis (2) and a decentralized lifting support assembly (3) with a plurality of hydraulic or autonomous lifting supports, **characterized in that** the chassis (2) is embodied according to at least one of Claims 11 or 12, wherein the control device (57) is connected to the power supply of the road vehicle.

14. Method for operating a decentralized lifting support assembly for a motorized road vehicle (1) having a chassis (2), in particular for mobile homes, sales vehicles or special purpose vehicles, wherein the lifting support assembly (3) has a plurality of, in particular four, hydraulic and autonomous lifting supports (4, 7) with a respectively assigned separate hydraulic supply unit (37) and with a common control device (57), **characterized in that** the hydraulic autonomous lifting supports (4, 7), in particular their electric pump drives (40), are supplied with current by the control device (57) with an integrated electrical power output stage (61), in particular semiconductor output stage.

15. Method according to Claim 14, **characterized in that** a hydraulic autonomous lifting support (4, 7) is retracted and extended at variable speeds, in particular in the fast gear and in the creep mode.

## Revendications

1. Agencement de béquilles de levage pour un véhicule routier motorisé (1), comprenant un châssis (2), en particulier pour des camping-cars, des camionnettes de vente ou des véhicules spéciaux, l'agencement de béquilles de levage (3) présentant plusieurs, en particulier quatre, béquilles de levage hydrauliques et autonomes (4, 7) avec une unité d'alimentation hydraulique propre respectivement associée (37) et avec un dispositif de commande commun (57), **caractérisé en ce que** le dispositif de commande (57) présente un amplificateur de puissance électrique intégré (61), en particulier un amplificateur à semi-conducteurs pour l'alimentation électrique des béquilles de levage autonomes hydrauliques (4, 7), en particulier de leurs entraînements de pompes électriques respectifs (40).

2. Agencement de béquilles de levage selon la revendication 1, **caractérisé en ce que** le dispositif de commande (57) présente une unité de commande (60), en particulier une électronique de commande, l'unité de commande (60) et l'amplificateur de puissance électrique (61) étant de préférence disposés en commun sur une platine de commande unique (59).

3. Agencement de béquilles de levage selon la revendication 1 ou 2, **caractérisé en ce que** le dispositif de commande (57) alimente en courant les béquilles de levage (4, 7), notamment leur entraînement de pompe électrique (40), individuellement et séparément.

4. Agencement de béquilles de levage selon la revendication 1, 2 ou 3, **caractérisé en ce que** le dispositif de commande (57) commande les béquilles de levage (4, 7) individuellement et séparément en contrôlant leur contact au sol.

5. Agencement de béquilles de levage selon l'une quelconque des revendications précédentes, **caractérisé en ce que** le dispositif de commande (57) détecte individuellement les courants fournis au niveau des béquilles de levage (4, 7), en particulier au niveau de leur entraînement de pompe électrique (40).

6. Agencement de béquilles de levage selon la revendication 5, **caractérisé en ce que** le dispositif de commande (57) détecte, au moyen de la détection de courant, la position finale d'un actionneur hydraulique respectif (36) des béquilles de levages autonomes hydrauliques (4, 7) .

7. Agencement de béquilles de levage selon l'une quelconque des revendications précédentes, **caractérisé en ce que** les béquilles de levage hydrauliques (4, 7) présentent chacune une unité de support (9) pouvant être déployée et réalisée pour le support propre sur un subjectile, avec un actionneur hydraulique (36) et une unité d'alimentation hydraulique propre associée (37), l'actionneur hydraulique (36) et l'unité d'alimentation hydraulique (37) étant réalisés sous forme d'unités séparées et pouvant être montées de manière autonome à distance mutuelle sur le véhicule routier (1) et étant connectés l'un à l'autre par des lignes hydrauliques en forme de tuyau souple (53).

8. Agencement de béquilles de levage selon l'une quelconque des revendications précédentes, **caractérisé en ce que** le dispositif de commande (57) est connecté par une technique signalétique à des capteurs (44) détectant un contact au sol, en particulier des capteurs de pression, des béquilles de levage (4, 7), et commande les béquilles de levage (4, 7) à chaque fois individuellement et en fonction du signal de capteur et du courant de moteur détecté de leur entraînement de pompe électrique (40).

9. Agencement de béquilles de levage selon l'une quelconque des revendications précédentes, **caractérisé en ce que** le dispositif de commande (57) est connecté par une technique signalétique à des capteurs de pression dans un circuit hydraulique des béquilles de levage (4, 7) et commande les béquilles de levage (4, 7) déployées avec un contact au sol et éventuellement mises à niveau, pour obtenir un rapport de pression hydraulique ajusté l'une à l'autre, en particulier une pression hydraulique identique.

10. Agencement de béquilles de levage selon l'une quelconque des revendications précédentes, **caractérisé en ce que** le dispositif de commande (57) présente un dispositif de mise à niveau intégré (62) avec un dispositif de détection (63) pour la position du véhicule, en particulier pour l'inclinaison du châssis.

11. Châssis pour véhicule routier motorisé (1), le châssis (2) présentant un agencement de béquilles de levage décentralisé (3) avec plusieurs béquilles de levage autonomes hydrauliques qui présentent chacune un actionneur hydraulique (36) avec une unité d'alimentation hydraulique propre associée (37), **caractérisé en ce que** l'agencement de béquilles de levage (3) est réalisé selon l'une quelconque des revendications 1 à 10.

12. Châssis selon la revendication 11, **caractérisé en ce que** les actionneurs hydrauliques (36) et leur unité d'alimentation hydraulique respective (37) sont montés séparément et à distance mutuelle sur le châssis (2), en particulier au niveau du côté intérieur et/ou du côté extérieur de longerons (22) du châssis (2) et sont connectés les uns aux autres par des lignes hydrauliques en forme de tuyau souple (53).

13. Véhicule routier comprenant un entraînement de conduite, un châssis (2) et un agencement de béquilles de levage décentralisé (3) comprenant plusieurs béquilles de levage autonomes hydrauliques, **caractérisé en ce que** le châssis (2) est réalisé selon au moins l'une quelconque des revendications 11 ou 12, le dispositif de commande (57) étant raccordé à l'alimentation électrique du véhicule routier.

14. Procédé pour faire fonctionner un agencement de béquilles de levage décentralisé pour un véhicule routier motorisé (1) comprenant un châssis (2), en particulier pour des camping-cars, des camionnettes de vente ou des véhicules spéciaux, l'agencement de béquilles de levage (3) présentant plusieurs, en particulier quatre, béquilles de levage hydrauliques et autonomes (4, 7) avec une unité d'alimentation hydraulique propre respectivement associée (37) et avec un dispositif de commande commun (57), **caractérisé en ce que** les béquilles de levage autonomes hydrauliques (4, 7), en particulier leurs entraînements de pompes électriques (40), sont alimentés en courant par le dispositif de commande (57) avec un amplificateur de puissance électrique intégré (61), en particulier un amplificateur à semi-conducteurs.

15. Procédé selon la revendication 14, **caractérisé en ce qu'**une béquille de levage autonome hydraulique (4, 7) peut être rentrée et sortie avec des vitesses variables, notamment de manière rapide et de manière lente.
